# EUROPEAN PATENT APPLICATION

(11) **EP 4 510 282 A1**
(43) Date of publication of application: **19.02.2025**
(21) Application number: 23913969.4
(22) Date of filing: 04.01.2023
(51) Int. Cl.: H01M 10/0567, H01M 10/0525

(54) **ELECTROLYTE SOLUTION, SECONDARY BATTERY COMPRISING SAME, AND ELECTRIC DEVICE**

(71) Applicant: Contemporary Amperex Technology Co., Limited, Fujian 352100 (CN)
(72) Inventor: WANG, Hansen, Ningde City, Fujian 352100 (CN); LIU, Chengyong, Ningde City, Fujian 352100 (CN); WAN, Pan, Ningde City, Fujian 352100 (CN); HUANG, Shengyuan, Ningde City, Fujian 352100 (CN); HU, Bobing, Ningde City, Fujian 352100 (CN); YANG, Wu, Ningde City, Fujian 352100 (CN)
(74) Representative: Frick, Robert
(86) International application number: PCT/CN2023/070362
(87) International publication number: WO 2024/145810

(57) **Abstract**

This application provides an electrolyte, including a solvent and a prelithiation additive, where the prelithiation additive is selected from at least one of the following: lithium salt with oxalate, lithium oxide, and lithium peroxide, and the solvent includes at least one compound of formula (I). R₁ is C1-6 fluoroalkyl; R₂ is a hydrogen atom, C1-6 alkyl, or C1-6 fluoroalkyl; and n represents 1 or 2. This allows a lithium metal secondary battery with no negative electrode to have a longer cycle life at a higher charge cut-off voltage.

## Description

### TECHNICAL FIELD

This application relates to the technical field of lithium batteries, and particularly to an electrolyte, and a secondary battery and an electric apparatus containing the electrolyte.

### BACKGROUND

With the widespread application of portable electronic products and electric vehicles, the development of secondary batteries with higher energy density has become a research hotspot. A lithium metal battery with no negative electrode is the ultimate solution for increasing energy density of a battery cell because it has spared an initial negative electrode material. However, due to absence of an excess lithium metal source on a surface of a negative electrode current collector in an initial state, the cycle life of a lithium metal battery with no negative electrode is not desirable. Particularly, the long cycling capability of the lithium metal battery with no negative electrode at high working voltage above 4.5 V still needs to be improved.

In this regard, the strategy of positive electrode prelithiation is usually used in the prior art: a suitable amount of lithium-rich material is added to positive electrode coating, and a lithium source is released after the first cycle, leading to loss of cyclicity. This provides an excess lithium source on the negative electrode side to compensate for the loss of active lithium. However, such strategy creates a large amount of dead volume and dead mass inside the positive electrode, leading to a reduction in energy density; and is not conducive to maintaining a good conductive network, affecting both long cycling and rate performance.

Therefore, in this field, there is a need for a technical solution that allows lithium metal batteries with no negative electrode to have high energy density and long cycling at high voltage.

### SUMMARY

This application is made in view of the above issues, aiming to provide an electrolyte, and a secondary battery and an electric apparatus containing the electrolyte.

To achieve the foregoing objective, this application provides an electrolyte, including a solvent and a prelithiation additive, where the prelithiation additive is selected from at least one of the following: lithium salt with oxalate, lithium oxide, and lithium peroxide, and the solvent includes at least one compound of formula (I): 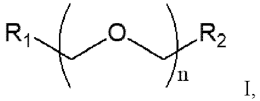 where
R₁ is C1-6 fluoroalkyl; R₂ is a hydrogen atom, C1-6 alkyl, or C1-6 fluoroalkyl; and n represents 1 or 2. The electrolyte of this application allows a lithium metal secondary battery with no negative electrode to have a longer cycle life at a higher charge cut-off voltage.

In any embodiment, the prelithiation additive is selected from at least one of lithium oxalate, lithium bis(oxalato)borate, lithium difluoro(oxalato)borate, lithium difluoro(bisoxalato)phosphate, lithium tetrafluoro(oxalato)phosphate, lithium oxide, and lithium peroxide; and optionally, the prelithiation additive is selected from at least one of lithium oxalate, lithium bis(oxalato)borate, and lithium difluoro(oxalato)borate. Further selection of the prelithiation additive is conducive to effectively exerting the prelithiation effect thereof, thereby further improving the cycle life of the lithium metal battery with no negative electrode.

In any embodiment, in formula (I), R₁ is C1-4 linear fluoroalkyl, and optionally C1-4 straight-chain fluoroalkyl; and/or R₂ is a hydrogen atom, C1-4 linear alkyl or C1-4 linear fluoroalkyl, and optionally a hydrogen atom, C1-4 straight-chain alkyl, or C1-4 straight-chain fluoroalkyl.

In any embodiment, the compound of formula (I) is selected from at least one of the following compounds: 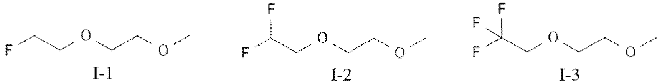 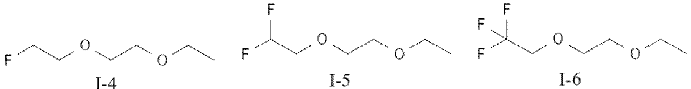 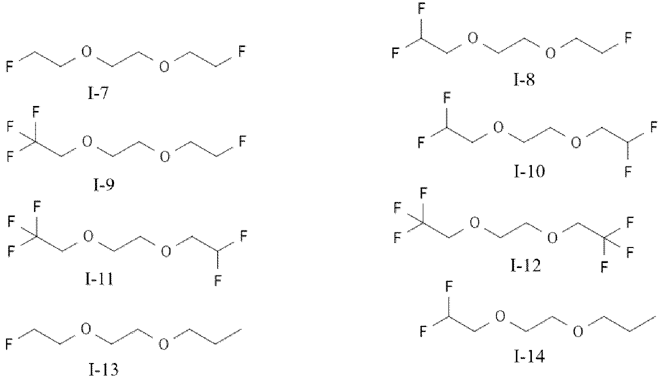 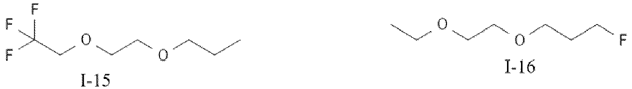 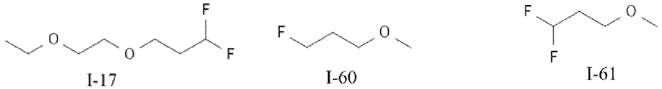 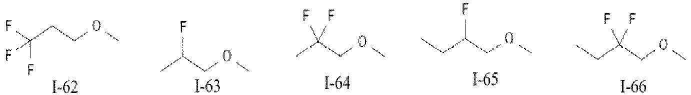 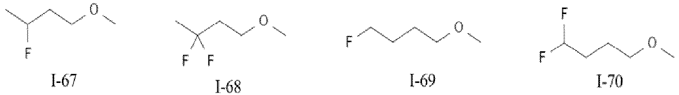 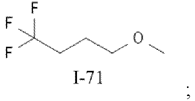 and
optionally, the compound of formula (I) is selected from at least one of I-2, I-11, I-66, and I-68, and more optionally, I-2 and/or I-66.

Further selection of formula (I) is conducive to stable cycling of the electrolyte at high working voltage, and further helps to improve the cycle life.

In any embodiment, a concentration of the prelithiation additive is 0.1 M to 1 M, optionally 0.3 M to 0.7 M, and more optionally 0.4 M to 0.6 M. Using the prelithiation additive concentration within the above range can effectively achieve the prelithiation effect without affecting the ion transport performance of the electrolyte, which is more conducive to long cycling of the lithium metal battery with no negative electrode at high voltage.

In any embodiment, the solvent includes at least 50% by weight, optionally at least 70% by weight, and more optionally at least 90% by weight of the compound of formula (I) based on a total mass of the solvent. The solvent containing the compound of formula (I) of the above percentage is more conducive to improving the oxidative stability of the electrolyte and improving the cycle life.

In any embodiment, the electrolyte in this application further includes an electrolytic salt, where the electrolytic salt is selected from at least one of lithium bis(fluorosulfonyl)imide, lithium hexafluorophosphate, lithium tetrafluoroborate, lithium hexafluoroarsenate, lithium bis(trifluoromethylsulfonyl)imide, lithium trifluoromethanesulfonate, and lithium difluorophosphate; optionally, the electrolytic salt is selected from at least one of lithium bis(fluorosulfonyl)imide, lithium hexafluorophosphate, and lithium bis(trifluoromethylsulfonyl)imide; and more optionally, the electrolytic salt is lithium bis(fluorosulfonyl)imide. The electrolytic salt selected can dissolve well in the solvent and decompose on the surface of the negative electrode to form an SEI component rich in inorganic fluorine, which is further conducive to long cycling of the lithium metal battery with no negative electrode.

In any embodiment, a concentration of the electrolytic salt is 0.5 M to 5 M, optionally 1 M to 3 M, and more optionally 1.5 M to 2.5 M. The lithium salt falling within the above concentration range can allow the electrolyte to have ideal ionic conductivity and viscosity, and facilitate the stability of the resistance of the positive electrode and negative electrode, especially the positive electrode to oxidation of the electrolyte, thereby improving the cycle life of the lithium metal secondary battery under high voltage.

A second aspect of this application provides a secondary battery including the electrolyte in the first aspect of this application.

In any embodiment, the secondary battery of this application further includes a negative electrode plate, where the negative electrode plate includes a negative electrode current collector and optionally a coating provided on at least one surface of the negative electrode current collector; where the coating is selected from coatings of the following metals or metal oxides: tin, zinc, aluminum, magnesium, silver, gold, gallium, indium, platinum, zinc oxide, aluminum oxide, and titanium oxide, and optionally silver, gold, or titanium oxide.

In any embodiment, a thickness of the coating is 200 nm at most, and optionally 100 nm at most. Such coating helps the battery achieve good cycle life.

A third aspect of this application provides an electric apparatus including the secondary battery selected from any one of claims 9 to 11.

The electrolyte of this application can enable a liquid lithium metal secondary battery with no negative electrode to achieve a longer cycle life at high working voltage.

### BRIEF DESCRIPTION OF DRAWINGS

FIG. 1 is a schematic diagram of a battery cell according to an embodiment of this application.
FIG. 2 is an exploded view of the battery cell according to the embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.

Description of reference signs:
1 battery pack; 2 upper box body; 3 lower box body; 4 battery module; 5 battery cell; 51 housing; 52 electrode assembly; and 53 top cover assembly.

### DESCRIPTION OF EMBODIMENTS

The following specifically discloses embodiments of an electrolyte, a secondary battery, and an electrical apparatus of this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

With the widespread application of portable electronic products and electric vehicles, the development of secondary batteries with higher energy density has become a research hotspot. A lithium metal battery with no negative electrode is the ultimate solution for increasing energy density of a battery cell because it has spared an initial negative electrode material. However, due to the absence of an excess lithium metal source on the surface of the negative electrode current collector in its initial state, the cycle life of the lithium metal battery with no negative electrode is poor. Especially at high working voltage (charge cut-off voltage), particularly when the voltage is increased to 4.5 V or above, the long cycling capability of the battery is poor, making it unable to further increase the energy density by increasing the working voltage (such as charge cut-off voltage).

The strategy of positive electrode prelithiation is usually used for lithium metal batteries with no negative electrode in the prior art to improve the long cycling capability of the batteries: a suitable amount of lithium-rich material is added to positive electrode coating, and a lithium source is released after the first cycle, leading to loss of cyclicity. This provides an excess lithium source on the negative electrode side to compensate for the loss of active lithium. However, such strategy creates a large amount of dead volume and dead mass inside the positive electrode, leading to a reduction in energy density; and is not conducive to maintaining a good conductive network, affecting both long cycling and rate performance. In summary, developing a better prelithiation method is the key to achieving long cycling of lithium metal batteries with no negative electrode at high voltage to have high energy density.

To achieve the objective of the present invention, the present invention provides an electrolyte that is used for lithium metal secondary batteries with no negative electrode, which can allow batteries to have long cycle life at high working voltage.

### Electrolyte

In an embodiment of this application, this application provides an electrolyte including a solvent and a prelithiation additive, where the prelithiation additive is selected from at least one of the following: lithium salt with oxalate, lithium oxide, and lithium peroxide, and the solvent includes at least one compound of formula (I): 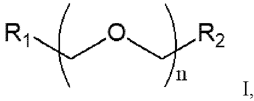 where
R₁ is C1-6 fluoroalkyl;
R₂ is a hydrogen atom, C1-6 alkyl, or C1-6 fluoroalkyl; and
n represents 1 or 2.

The electrolyte of this application allows a lithium metal secondary battery with no negative electrode to have a longer cycle life at a higher charge cut-off voltage.

Herein, "secondary battery with no negative electrode" and similar expressions mean a secondary battery whose negative electrode plate has only a metal foil current collector without any negative electrode active material.

The electrolyte of this application includes a prelithiation additive selected from lithium salt with oxalate, lithium oxide, and lithium peroxide. Such substances can oxidatively decompose at high working voltage (above 4.3 V, for example, 4.6 V). A lithium salt with an oxalate structure is used as an example. Its oxalate can be oxidized on a positive electrode side under a high voltage environment, for example, undergoing the following reaction:

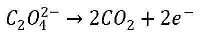

In addition, its lithium ion part is reduced on a negative electrode side, depositing in the form of lithium metal on a surface of a negative electrode plate, thus providing the prelithiation effect required.

Including the prelithiation additive in the electrolyte avoids the traditional prelithiation manner of adding prelithiation powder and a corresponding binder in a process of making a positive electrode slurry. The prelithiation additive does not affect compacted density and an internal conductive network structure of a positive electrode plate after releasing a lithium source, ensuring the stability of the positive electrode throughout cycling. This is more conducive to long-term stable cycling of the battery.

In addition, carbon dioxide released in decomposition of the prelithiation additive may react with lithium metal of the negative electrode to form an inorganic lithium carbonate component which participates in SEI formation, promoting a denser lithium metal deposition morphology and improving the cycling efficiency. This is more conducive to extending the cycle life.

Without wishing to be bound by any theory, the inventors have found that the prelithiation additive generally requires a high voltage (above 4.5 V, for example, 4.6 V) to be oxidatively decomposed, achieving the prelithiation effect. Increasing the charging voltage can further improve the energy density of lithium metal batteries.

However, traditional electrolytes (especially their solvents) are often unable to support stable cycling at such high working voltage. The inventors have found that using a compound of formula (I) of this application as a solvent in the electrolyte can enable lithium metal batteries (especially lithium metal batteries with no negative electrode) to cycle stably under high working voltage conditions, thereby improving both the energy density and cycle life of lithium metal batteries.

The compound of formula (I) of this application is an ether with a small carbon chain length and a not too high fluorine content, and its fluorine atom substitution is conducive to improving the oxidative stability of the electrolyte, allowing batteries to cycle stably at a higher cut-off voltage. However, the inventors have found that in the compound of formula (I), a substitution site of fluorine atom is crucial-the fluorine atom substitution cannot be performed on carbon adjacent to an oxygen atom. This is conducive to maintaining the good capability of the compound in dissolving a lithium salt (for example, a dissolving concentration of lithium bis(fluorosulfonyl)imide (LiFSI) should reach 2 M or above).

In some embodiments, the prelithiation additive is selected from at least one of lithium oxalate (LO), lithium bis(oxalato)borate (LiBOB), lithium difluoro(oxalato)borate (LiDFOBOB), lithium difluoro(bisoxalato)phosphate, lithium tetrafluoro(oxalato)phosphate, lithium oxide (Li₂O), and lithium peroxide (Li₂O₂); and optionally, the prelithiation additive is selected from at least one of lithium oxalate, lithium bis(oxalato)borate, and lithium difluoro(oxalato)borate. Further selection of the prelithiation additive is conducive to effectively exerting the prelithiation effect thereof, thereby further improving the cycle life of the lithium metal battery with no negative electrode.

For the above preferred prelithiation additives, the inventors have found that their dissolvability in the compound of formula (I) differs. For example, LiDFOB typically has good dissolvability in the compound of formula (I), reaching at least a concentration of 1M, while LO and LiBOB are generally slightly dissolvable or not dissolvable. However, when the dissolvability is not ideal, preparing them into a uniform suspension for battery cell cycling can still achieve the desired prelithiation effect.

In some embodiments, R₁ is C1-4 linear fluoroalkyl, and optionally, C1-4 straight-chain fluoroalkyl. In some embodiments, R₂ is a hydrogen atom, C1-4 linear alkyl or C1-4 linear fluoroalkyl, and optionally, a hydrogen atom, C1-4 straight-chain alkyl, or C1-4 straight-chain fluoroalkyl.

In some embodiments, optionally, the number of fluorine atoms for substitution in the fluoroalkyl (straight-chain) is not more than 3.

In some embodiments, in formula (I), when n=1, R₁ is C1-3 straight-chain fluoroalkyl with no more than 3 fluorine atoms, and R₂ is a hydrogen atom.

In some embodiments, in formula (I), when n=2, R₁ is C1-4 straight-chain fluoroalkyl, and R₂ is a hydrogen atom, C1-4 straight-chain alkyl, or C1-4 straight-chain fluoroalkyl, with R₁ and R₂ each containing no more than 3 fluorine atoms.

In some embodiments, the compound of formula (I) is selected from at least one of the following compounds:

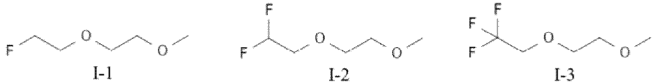

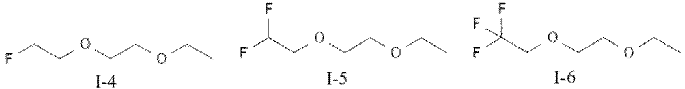

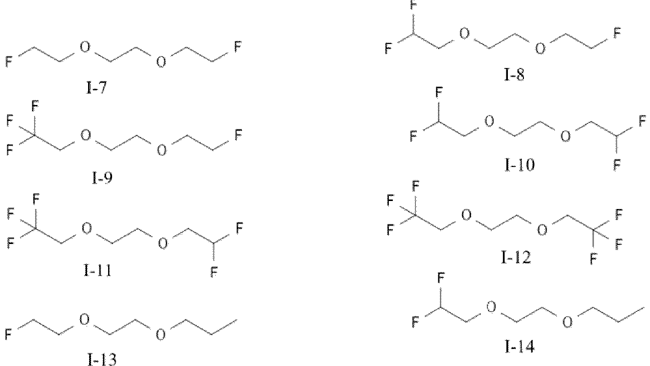

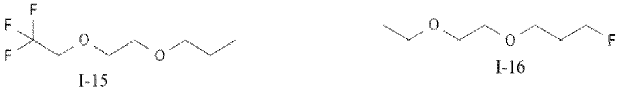

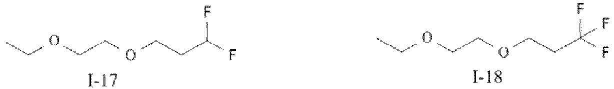

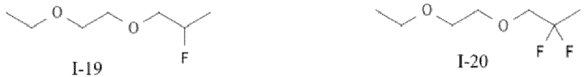

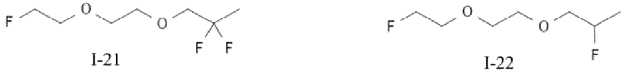

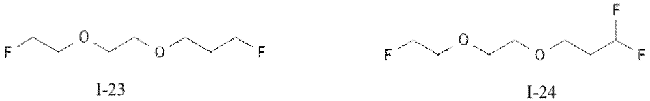

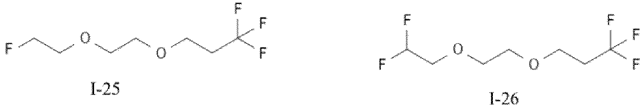

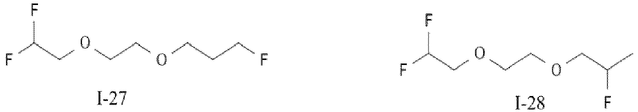

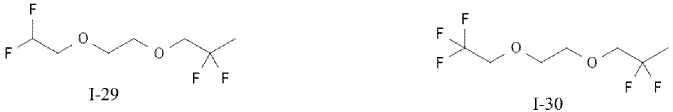

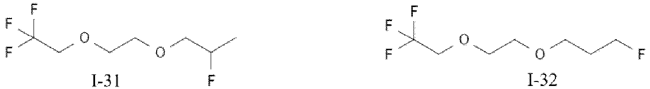

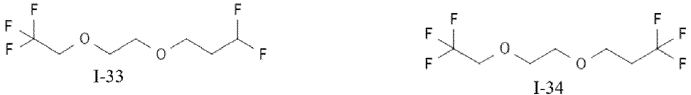

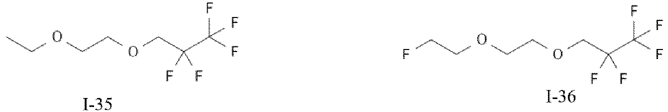

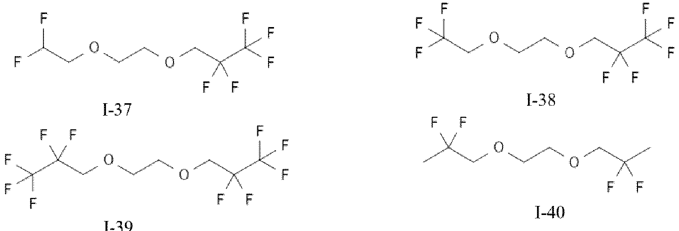

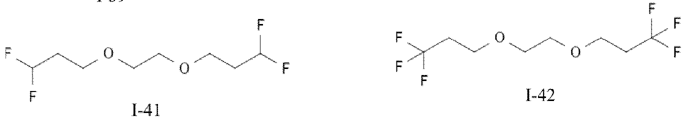

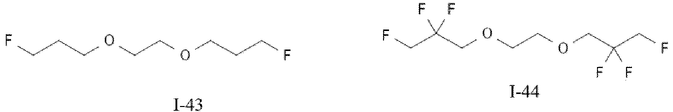

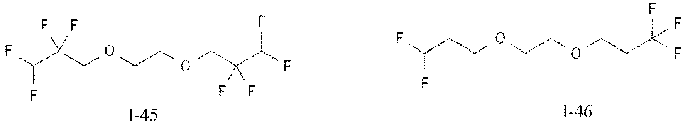

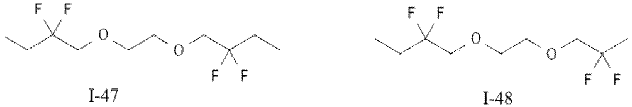

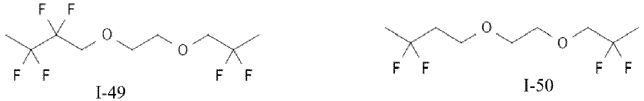

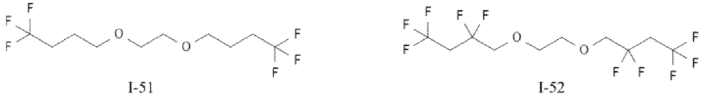

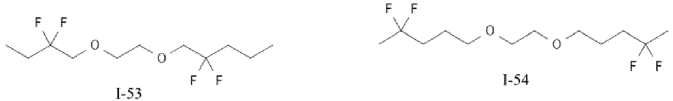

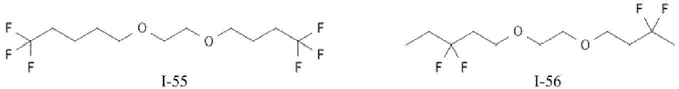

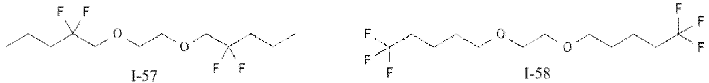

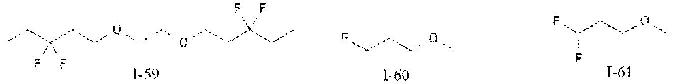

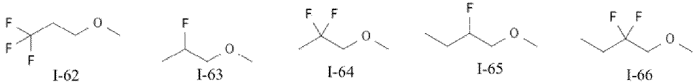

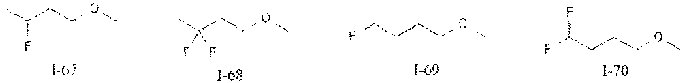

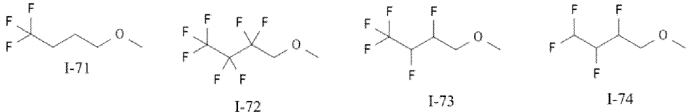

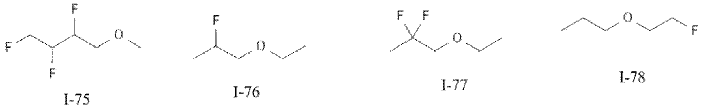

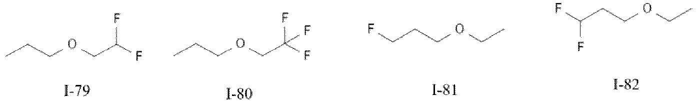

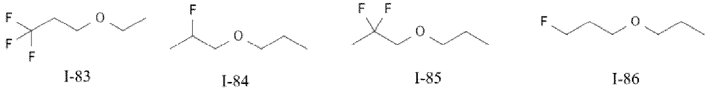

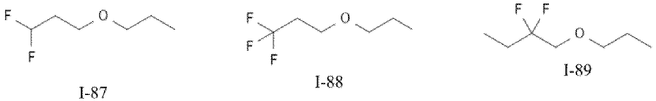

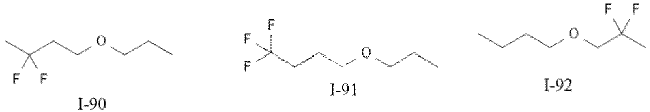

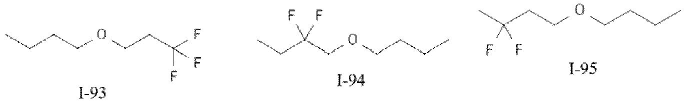

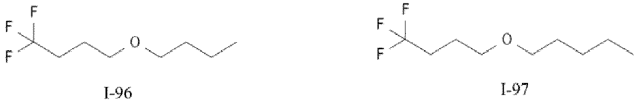

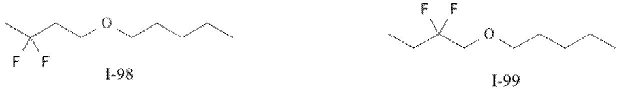

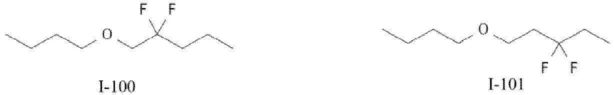

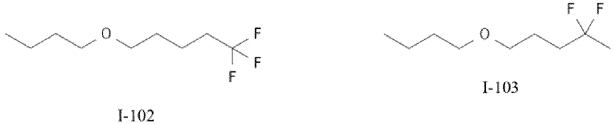

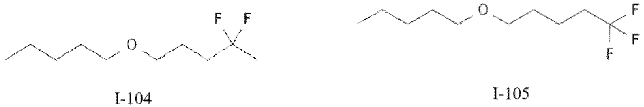

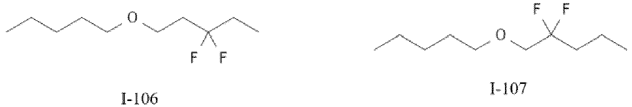

In some embodiments, the compound of formula (I) is selected from at least one of compounds I-1 to I-16, and I-60 to I-71. In some embodiments, optionally, the compound of formula (I) is selected from at least one of I-2, I-11, I-66, and I-68, and more optionally, I-2 and/or I-66.

Further selection of formula (I) is conducive to stable cycling of the electrolyte at high working voltage, and further helps to improve the cycle life.

In some embodiments, a concentration of the prelithiation additive is 0.1 M to 1 M, optionally 0.3 M to 0.7 M, and more optionally 0.4 M to 0.6 M. Using the prelithiation additive concentration within the above range can effectively achieve the prelithiation effect without affecting the ion transport performance of the electrolyte, which is more conducive to long cycling of the lithium metal battery with no negative electrode at high voltage. Moreover, as mentioned above, gas will be generated during the decomposition of the prelithiation additive, so the percentage thereof needs to be controlled.

In some embodiments, the solvent includes at least 50% by weight, optionally at least 70% by weight, and more optionally at least 90% by weight of the compound of formula (I) based on a total mass of the solvent. The solvent containing the compound of formula (I) of the above percentage is more conducive to improving the oxidative stability of the electrolyte and improving the cycle life.

In some embodiments, the solvent further includes at least one additional solvent selected from the following substances: dimethoxyethane, ethylene glycol methyl ethyl ether, ethylene glycol diethyl ether, ethylene glycol dipropyl ether, diethylene glycol dimethyl ether, triethylene glycol dimethyl ether, tetraethylene glycol dimethyl ether, propylene glycol dimethyl ether, butylene glycol dimethyl ether, dimethoxymethane, diethoxymethane, trimethyl orthoformate, triethyl orthoformate, trimethyl orthocarbonate, triethyl orthocarbonate, ethylene carbonate, vinylene carbonate, dimethyl carbonate, ethyl methyl carbonate, diethyl carbonate, fluoroethylene carbonate, acetonitrile, dimethyl sulfoxide, sulfolane, bis(2,2,2-trifluoroethyl) ether, 1,1,2,2-tetrafluoroethyl-2,2,3,3-tetrafluoropropyl ether, 1,2-bis(1,1,2,2-tetrafluoroethoxy)ethane, fluorobenzene, para-difluorobenzene, ortho-difluorobenzene, meta-difluorobenzene, trifluorobenzene, trifluorotoluene, trifluoromethoxybenzene, acetone, and perfluoropentanone; and optionally, the additional solvent is selected from dimethyl carbonate and perfluoropentanone. The above additional solvents help to improve the cycling efficiency of lithium metal and improve cycle life.

In some embodiments, the solvent consists of the compound of formula (I).

In some embodiments, the electrolyte in this application further includes an electrolytic salt, where the electrolytic salt is selected from at least one of lithium bis(fluorosulfonyl)imide, lithium hexafluorophosphate, lithium tetrafluoroborate, lithium hexafluoroarsenate, lithium bis(trifluoromethylsulfonyl)imide, lithium trifluoromethanesulfonate, and lithium difluorophosphate. In some embodiments, optionally, the electrolytic salt is selected from at least one of lithium bis(fluorosulfonyl)imide, lithium hexafluorophosphate, and lithium bis(trifluoromethylsulfonyl)imide; and more optionally, the electrolytic salt is lithium bis(fluorosulfonyl)imide. The electrolytic salt selected can dissolve well in the solvent and decompose on the surface of the negative electrode to form an SEI component rich in inorganic fluorine, which is further conducive to long cycling of the lithium metal battery with no negative electrode.

In some embodiments, a concentration of the electrolytic salt is 0.5 M to 5 M, optionally 1 M to 3 M, and more optionally 1.5 M to 2.5 M. The lithium salt falling within the above concentration range can allow the electrolyte to have ideal ionic conductivity and viscosity, and facilitate the stability of the resistance of the positive electrode and negative electrode, especially the positive electrode to oxidation of the electrolyte, thereby improving the cycle life of the lithium metal secondary battery under high voltage.

Herein, in the electrolyte, the concentration of the electrolytic salt is a concentration of a lithium salt excluding the prelithiation additive.

In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature performance or low-temperature performance of the battery.

### Secondary battery and electric apparatus

A second aspect of this application provides a secondary battery including the electrolyte of this application.

In some embodiments, the secondary battery of this application is a battery with no negative electrode.

In some embodiments, the secondary battery of this application further includes a negative electrode plate, where the negative electrode plate includes a negative electrode current collector and optionally a coating provided on at least one surface of the negative electrode current collector; where the coating is selected from coatings of the following metals or metal oxides: tin, zinc, aluminum, magnesium, silver, gold, gallium, indium, platinum, zinc oxide, aluminum oxide, and titanium oxide, and optionally silver, gold, or titanium oxide. The coating helps to induce lithium metal deposition, further improving the cycle life of the battery. Such a coating cannot be used as an active negative electrode alloy material.

In some embodiments, the coating is applied to the surface of the current collector by using a suitable method known to those skilled in the art, for example, vapor deposition or magnetron sputtering.

In some embodiments, a thickness of the coating is 200 nm at most (that is 0-200 nm), and optionally 100 nm at most. In some embodiments, the thickness of the coating is 25-75 nm, and optionally 50 nm. The coating within such a range helps the battery achieve good cycle life.

In some embodiments, the negative electrode current collector may be a metal foil current collector or a composite current collector. For example, in a case of metal foil, a copper foil, a nickel foil, or a stainless steel foil can be used. Preferably, a copper foil can be used.

In some embodiments, the charge cut-off voltage of the secondary battery of this application is greater than 4.3 V, optionally greater than 4.5 V, and optionally 4.6 V. In some embodiments, a cycling voltage interval of the secondary battery of this application is 2.8 V-4.3 V.

A third aspect of this application provides an electric apparatus including the secondary battery of this application.

The secondary battery of this application takes the form of battery cell, battery module, and battery pack.

The following describes the battery cell, the battery module, the battery pack, and the electric apparatus of this application with appropriate reference to the accompanying drawings.

An embodiment of this application provides a secondary battery.

Typically, the secondary battery further includes a positive electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### [Positive electrode plate]

The positive electrode plate includes a positive electrode current collector and a positive electrode film layer provided on at least one surface of the positive electrode current collector, and the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material used for batteries in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (or NCM₃₃₃ for short), LiNi_{0.3}Co_{0.2}Mn_{0.3}O₂ (or NCM₅₂₃ for short), LiNi_{0.5}Co_{0.25}Mn_{0.25}O₂ (or NCM₂₁₁ for short), LiNi_{0.6}Co_{0.2}Mn_{0.2}O₂ (or NCM₆₂₂ for short), and LiNi_{0.8}Co_{0.1}Mn_{0.1}O₂ (or NCM₈₁₁ for short)), lithium nickel cobalt aluminum oxide (for example, LiNi_{0.83}Co_{0.13}Al_{0.03}O₂), and modified compounds thereof. Examples of the olivine-structured lithium-containing phosphate may include but are not limited to at least one of lithium iron phosphate (for example, LiFePO₄ (or LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

### [Outer package]

In some embodiments, the secondary battery may include an outer package for packaging the positive electrode plate, the negative electrode plate, and an electrolyte. For example, the positive electrode plate, the negative electrode plate, and the separator may be laminated or wound to form a battery cell of a laminated structure or a battery cell of a wound structure, and the battery cell is packaged in an outer package. The electrolyte may be the electrolyte according to the first aspect of this application, and the electrolyte infiltrates into the battery cell. There may be one or more battery cells in the secondary battery, and the quantity can be adjusted based on needs.

In an embodiment, this application provides an electrode assembly. In some embodiments, the positive electrode plate, the negative electrode plate, and the separator may be made into an electrode assembly through winding or lamination. The outer package may be used for packaging the electrode assembly and the electrolyte.

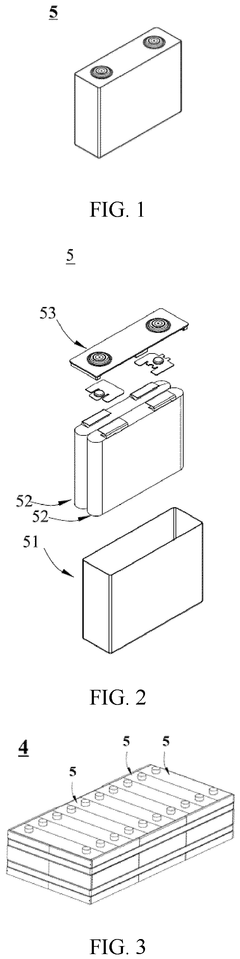

In some embodiments, the outer package of the secondary battery may alternatively be a soft pack, for example, a soft pouch. A material of the soft pack may be plastic, for example, may include one or more of polypropylene (PP), polybutylene terephthalate (PBT), polybutylene succinate (PBS), and the like. In some embodiments, the outer package of the secondary battery may be a hard shell, for example, a hard plastic shell, an aluminum shell, or a steel shell. This application does not impose any special limitations on a shape of the secondary battery, and the secondary battery may be cylindrical, rectangular, or of any other shapes. For example, FIG. 1 shows a rectangular battery cell 5 as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The battery cell 5 may include one or more electrode assemblies 52, and persons skilled in the art may make choices according to actual requirements.

In some embodiments, the battery cell may be assembled into a battery module, and the battery module may include one or more battery cells. The specific quantity may be chosen by persons skilled in the art based on the use and capacity of the battery module.

FIG. 3 shows a battery module 4 as an example. Referring to FIG. 3, in the battery module 4, a plurality of battery cells 5 may be sequentially arranged in a length direction of the battery module 4. Certainly, the battery cells may alternatively be arranged in any other manners. Further, the plurality of battery cells 5 may be fastened by using fasteners.

Optionally, the battery module 4 may further include a housing with an accommodating space, and the plurality of battery cells 5 are accommodated in the accommodating space.

In some embodiments, the battery cell or battery module may alternatively be assembled into a battery pack. The battery pack may include one or more battery cells or battery modules. The specific quantity may be chosen by persons skilled in the art based on the use and capacity of the battery pack.

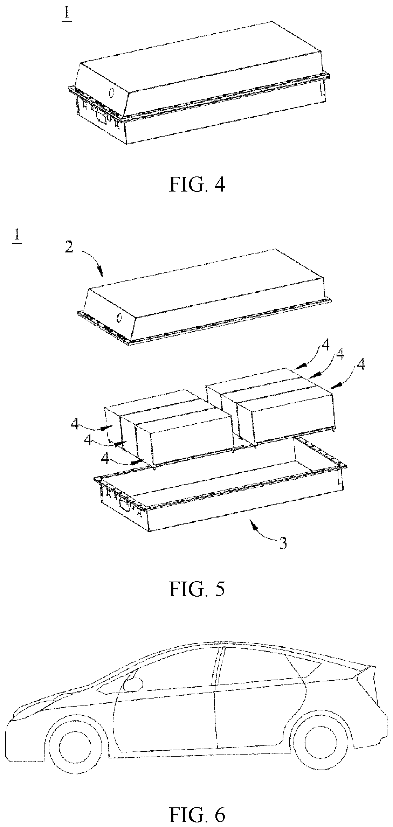

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the battery cell, the battery module, and the battery pack provided in this application. The battery cell, the battery module, or the battery pack may be used as a power source of the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

For the electric apparatus, its usage requirements may be used to select the battery cell, the battery module, or the battery pack.

FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### 1. Preparation of electrolyte

1.87 g of LiFSI and 0.36 g of LiDFOB were taken and added into 5 ml of I-2 solvent. They were stirred thoroughly to form a colorless transparent electrolyte with a concentration of 2M LiFSI and 0.5M LiDFOB, which was used for subsequent performance testing and battery cell cycling.

2. Preparation of liquid lithium metal secondary battery with no negative electrode
(1) Preparation of positive electrode: A positive electrode active material of lithium nickel cobalt manganese oxide LiNi_{0.8}Co_{0.1}Mn_{0.1}O₂ (NCM₈₁₁), a conductive agent acetylene black, and a binder PVDF were mixed at a mass ratio of 98:1:1, a solvent N-methylpyrrolidone (NMP) was added, and they were stirred until the system was uniform to obtain a positive electrode slurry (with a solid content of 70%). The positive electrode slurry was evenly applied on both sides of a positive electrode current collector aluminum foil at a loading of about 25 mg/cm², air dried at room temperature, and then transferred to an oven for further drying. The foil was cut into 40 mm*50 mm rectangles to make positive electrode plates, with a positive electrode surface capacity of 3.5 mAh/cm².
(2) Separator: A polyethylene porous film was used and cut into 45 mm*55 mm rectangles for later use.
(3) Preparation of negative electrode: A 12 µm thick copper foil was used and cut into 41 mm*51 mm rectangles to serve as negative electrode plates for later use.
(4) Battery assembly: One cut positive electrode plate was matched with two cut negative electrode plates, with the above separator disposed therebetween to separate the positive electrode and negative electrode. They were wrapped in an aluminum-plastic film bag to form a stacked dry battery cell. 0.3 g of the electrolyte was injected, and vacuum heat sealing was performed on the aluminum-plastic film bag to obtain a stacked battery (with a rated capacity of 140 mAh). The stacked battery was left standing at room temperature for at least 6 hours before the cycling test was started.

3. Room temperature long cycling test for liquid lithium metal secondary battery with no negative electrode

The battery prepared above was taken. At an ambient temperature of 25°C, the battery was charged at a constant rate of 0.2C (that is, 28 mA) to a cut-off voltage of 4.6 V, charged at the constant voltage of 4.6 V until the current decayed to 0.1C (that is, 14 mA), then discharged at a rate of 1C (140 mA) to 2.8 V. This was one charge-discharge cycle (that is, the cycling voltage interval was 2.8 V to 4.6 V). Such charge-discharge cycle was repeated, and the discharge capacity of each cycle was tested. When the discharge capacity of a certain cycle decayed to 80% of the first cycle discharge capacity, the life of the battery was considered to end, and the number of cycles at this point was the cycle life. The test results are shown in Table 1 below.

### Examples 2 to 5

The preparation and testing methods of Examples 2 to 5 were similar to those in Example 1 except that the prelithiation additives used were different. Details and test results are shown in Table 1.

In the process of preparing the electrolytes in the examples, if it was found that a transparent solution could not be formed due to incomplete dissolution, first, a magnetic stirrer was used to stir the electrolyte at a high rotation speed of 100 rpm. Then, a glass bottle containing the electrolyte was placed in an ultrasonic instrument (FS110D of Fisher Scientific), and 37 kHz ultrasound was used to fully break and disperse an undissolved lithium salt in the electrolyte, so as to form a uniform suspension. After left standing for 10 hours, the suspension still did not show any obvious stratification. The suspension electrolyte prepared above was used for battery cell manufacturing and testing as shown in Example 1.

In the process of preparing the electrolytes in the following examples, if the prelithiation additive could not be dissolved and a suspension needed to be prepared, the above operation was followed.

### Examples 6 to 8

The preparation and testing methods of Examples 6 to 8 were similar to those in Example 1 except that the solvents of formula (I) were different. Details and test results are shown in Table 1.

### Examples 9 to 14

The preparation and testing methods of Examples 9 to 14 were similar to those in Example 1 except that the concentrations of the prelithiation additives were different. Details and test results are shown in Table 1.

### Example 15 to 17

The preparation and testing methods of Examples 15 to 17 were similar to those in Example 1 except that the solvents contain other solvents in addition to the solvent of formula (I) of the present invention. Details and test results are shown in Table 1.

### Comparative Example 1

The preparation and testing method of Comparative Example 1 were similar to those in Example 1 except that no prelithiation additive was added. Details and test results are shown in Table 1.

### Comparative Example 2

The preparation and testing method of Comparative Example 2 were similar to those in Example 1 except that the solvent was dimethoxyethane (DME). Details and test results are shown in Table 1.

### Comparative Example 3

The preparation and testing method of Comparative Example 3 were similar to those in Example 1 except that the solvent was a mixed solvent of ethylene carbonate (EC) and diethyl carbonate (DEC) (referred to as "EC-DEC" in the table below). Details and test results are shown in Table 1.

### Comparative Example 4

The preparation and testing method of Comparative Example 4 were similar to those in Example 1 except that the secondary battery was cycled in a cycling voltage interval of 2.8 V to 4.3 V The test results are shown in Table 1.

### Comparative Example 5

The preparation and testing method of Comparative Example 4 were similar to those in Example 1 except that the secondary battery was cycled in a cycling voltage interval of 2.8 V to 4.3 V The test results are shown in Table 1.

**Table 1**

| No. | Prelithiation additive | Additive concentration (M) | Solvent of formula (I) | Other solvents | Mass percentage of another solvent | Electrolytic salt | Concentration of electrolytic salt (M) | Electrolyte state | Cycling voltage interval (V) | Cycle life (cycles) | First cycle discharge energy (mWh) |
|---|---|---|---|---|---|---|---|---|---|---|---|
| Example 1 | LiDFOB | 0.5 | I-2 | - | - | LiFSI | 2 | Settled solution | 2.8-4.6 | 156 | 489.6 |
| Example 2 | LO | 0.5 | I-2 | - | - | LiFSI | 2 | Suspension | 2.8-4.6 | 154 | -* |
| Example 3 | LiBOB | 0.5 | I-2 | - | - | LiFSI | 2 | Suspension | 2.8-4.6 | 148 | - |
| Example 4 | Li₂O | 0.5 | I-2 | - | - | LiFSI | 2 | Suspension | 2.8-4.6 | 146 | - |
| Example 5 | Li₂O₂ | 0.5 | I-2 | - | - | LiFSI | 2 | Suspension | 2.8-4.6 | 135 | - |
| Example 6 | LiDFOB | 0.5 | I-66 | - | - | LiFSI | 2 | Suspension | 2.8-4.6 | 155 | - |
| Example 7 | LiDFOB | 0.5 | I-11 | - | - | LiFSI | 2 | Suspension | 2.8-4.6 | 142 | - |
| Example 8 | LiDFOB | 0.5 | I-68 | - | - | LiFSI | 2 | Suspension | 2.8-4.6 | 131 | - |
| Example 9 | LiDFOB | 0.05 | I-2 | - | - | LiFSI | 2 | Settled solution | 2.8-4.6 | 113 | - |
| Example 10 | LiDFOB | 0.1 | I-2 | - | - | LiFSI | 2 | Settled solution | 2.8-4.6 | 120 | - |
| Example 11 | LiDFOB | 0.3 | I-2 | - | - | LiFSI | 2 | Settled solution | 2.8-4.6 | 137 | - |
| Example 12 | LiDFOB | 0.7 | I-2 | - | - | LiFSI | 2 | Settled solution | 2.8-4.6 | 153 | - |
| Example 13 | LiDFOB | 1 | I-2 | - | - | LiFSI | 2 | Suspension | 2.8-4.6 | 133 | - |
| Example 14 | LiDFOB | 1.5 | I-2 | - | - | LiFSI | 2 | Suspension | 2.8-4.6 | 124 | - |
| Example 15 | LiDFOB | 0.5 | I-2 | 1,1,2,2-tetrafluoroethyl-2,2,3,3-tetrafluoropropyl ether | 10% | LiFSI | 2 | Settled solution | 2.8-4.6 | 151 | - |
| Example 16 | LiDFOB | 0.5 | I-2 | 1,2-bis(1,1,2,2-tetrafluoroethoxy) ethane | 10% | LiFSI | 2 | Settled solution | 2.8-4.6 | 149 | - |
| Example 17 | LiDFOB | 0.5 | I-2 | 1,2-bis(1,1,2,2-tetrafluoroethoxy) ethane | 50% | LiFSI | 2 | Settled solution | 2.8-4.6 | 132 | - |
| Comparative Example 1 | - | - | I-2 | - | - | LiFSI | 2 | Settled solution | 2.8-4.6 | 105 | 488.9 |
| Comparative Example 2 | LiDFOB | 0.5 | DME | - | - | LiFSI | 2 | Settled solution | 2.8-4.6 | 35 | - |
| Comparative Example 3 | - | - | EC-DEC | - | - | LiPF₆ | 1 | Settled solution | 2.8-4.6 | 6 | - |
| Comparative Example 4 | - | - | I-2 | - | - | LiFSI | 2 | Settled solution | 2.8-4.3 | 111 | |
| Comparative Example 5 | LiDFOB | 0.5 | I-2 | - | - | LiFSI | 2 | Settled solution | 2.8-4.3 | 110 | 452.3 |

| | | | | | | | | | | | |
|---|---|---|---|---|---|---|---|---|---|---|---|
| * The "-" marked in the column "first cycle energy release" in the table indicates that it was not tested. Testing the first cycle discharge energy is to illustrate that increasing the working voltage interval (charge cut-off voltage) helps to improve the energy density of the battery cell. Although the cycling performance of Comparative Example 1 is not outstanding, the first cycle energy density in a high working voltage interval still shows a significant improvement as compared with 4.3 V | | | | | | | | | | | |

It can be seen from Table 1 that the combination of the prelithiation additive and the solvent of formula (I) in the present invention can significantly improve the cycle life of the secondary battery with no negative electrode. The inventors also found that even if the prelithiation additive of the present invention cannot be well dissolved, as long as it is well dispersed in the electrolyte in the form of a suspension (as mentioned above, the suspension does not show any obvious stratification after being left standing for 10 hours), it does not affect the exertion of its prelithiation function. Meanwhile, the concentration of the prelithiation additive should be controlled between 0.05 M to 1.5 M, preferably between 0.1 M to 1 M. This can effectively improve the cycle life, and allows the electrolyte to have good ion transport capability.

The above examples show that the combination of the solvent of formula (I) and the prelithiation additive of the present invention greatly improves the positive electrode cycling stability of the battery cell under an ultra-high voltage of 4.6 V, and such a high working voltage is also conducive to oxidative decomposition of the prelithiation additives to perform the prelithiation effect, thereby further extending the cycle life of the lithium metal secondary battery with no negative electrode. It can be seen from Comparative Examples 4 and 5 that the prelithiation additives at low voltage (for example., 4.3 V) do not significantly improve the cycle life of the lithium metal secondary battery with no negative electrode. The prelithiation additive of this application can only effectively function at high working voltage, and high working voltages are also conducive to further improving energy density.

### Examples 18 to 25

The preparation and testing methods of Examples 18 to 25 were similar to those in Example 1 except that the concentrations of the electrolytic salts were different. Details and test results are shown in Table 2. If the prelithiation additive cannot be dissolved, the handling was the same as that in Example 2.

### Examples 26 and 27

The preparation and testing methods of Examples 26 and 27 were similar to those in Example 1 except for the electrolytic salts. Details and test results are shown in Table 2.

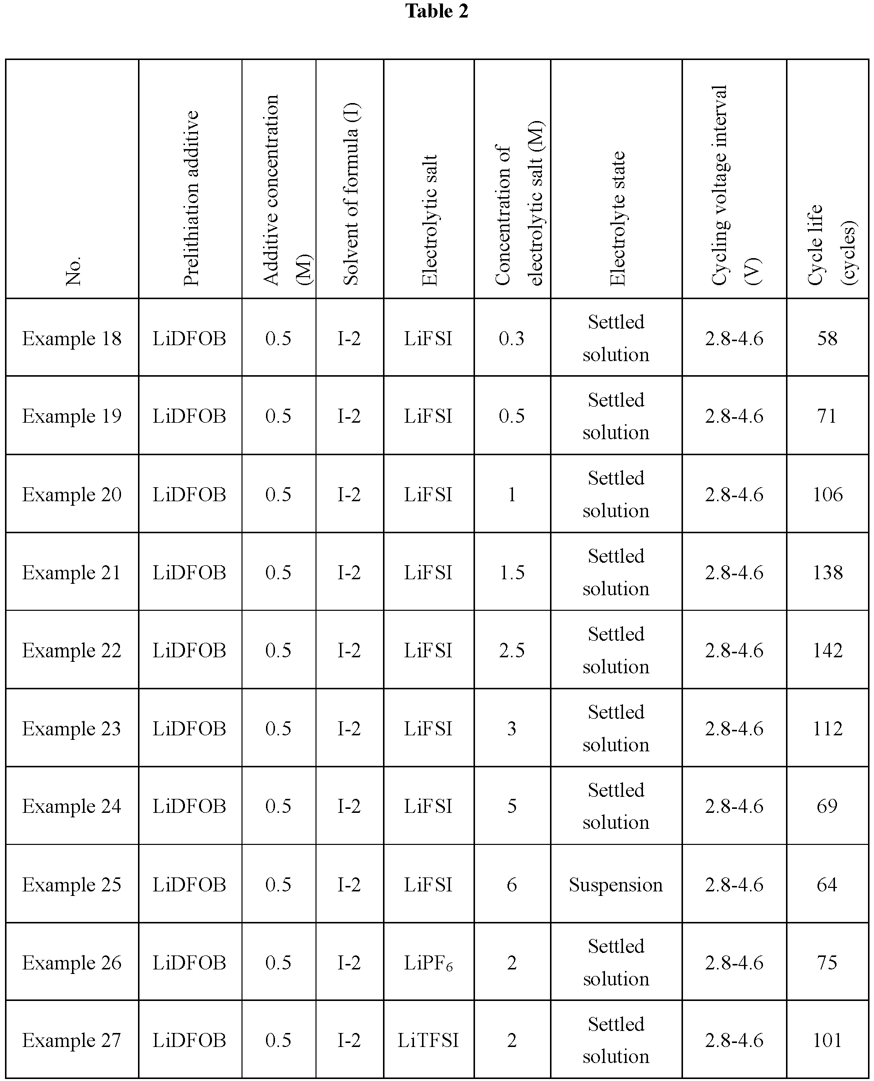

It can be seen from the above examples that selecting lithium bis(fluorosulfonyl)imide, lithium hexafluorophosphate, and lithium bis(trifluoromethylsulfonyl)imide as the electrolytic salts is conducive to achieving good cycle life at room temperature. Moreover, the concentration of the electrolytic salt falling between 0.5 M to 5 M offers more ideal cycle life.

### Examples 28 to 32

In Example 28, the negative electrode copper foil current collector was first vapor-deposited with a 50 nm thick Ag layer, then was used to make a lithium metal battery with no negative electrode. Other tests were similar to those in Example 1. The preparation and testing methods of Examples 29 to 31 were similar to those in Example 23. Details are shown in Table 1. In Example 32, the negative electrode copper foil current collector was first magnetron sputtered with a 50 nm thick TiO₂ layer, then was used to make a lithium metal battery with no negative electrode. Other tests were similar to those in Example 1.

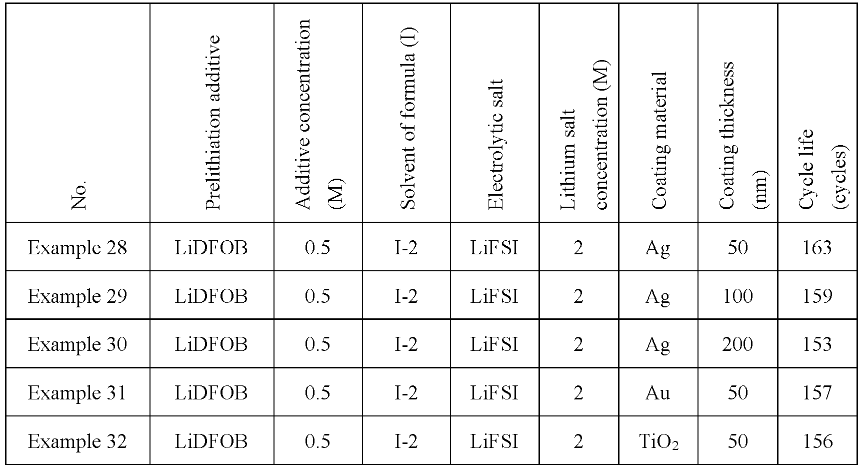

As it can be seen from the above that a metal coating (especially gold or silver coating) is more conducive to further improving the cycle life. The coating thickness is at most 200 nm, and preferably between 50 mm to 200 nm. Such range offers good performance.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. An electrolyte, comprising a solvent and a prelithiation additive, wherein the prelithiation additive is selected from at least one of the following: lithium salt with oxalate, lithium oxide, and lithium peroxide, and the solvent comprises at least one compound of formula (I): 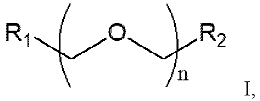 wherein R₁ is C1-6 fluoroalkyl;
R₂ is a hydrogen atom, C1-6 alkyl, or C1-6 fluoroalkyl; and
n represents 1 or 2.

2. The electrolyte according to claim 1, wherein the prelithiation additive is selected from at least one of lithium oxalate, lithium bis(oxalato)borate, lithium difluoro(oxalato)borate, lithium difluoro(bisoxalato)phosphate, lithium tetrafluoro(oxalato)phosphate, lithium oxide, and lithium peroxide; and optionally, the prelithiation additive is selected from at least one of lithium oxalate, lithium bis(oxalato)borate, and lithium difluoro(oxalato)borate.

3. The electrolyte according to claim 1 or 2, wherein
R₁ is C1-4 linear fluoroalkyl, and optionally, C1-4 straight-chain fluoroalkyl; and/or
R₂ is a hydrogen atom, C1-4 linear alkyl or C1-4 linear fluoroalkyl, and optionally, a hydrogen atom, C1-4 straight-chain alkyl, or C1-4 straight-chain fluoroalkyl.

4. The electrolyte according to any one of claims 1 to 3, wherein the compound of formula (I) is selected from at least one of the following compounds: 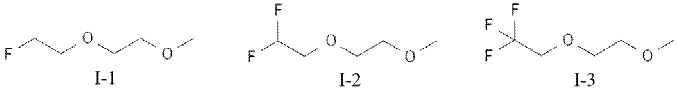 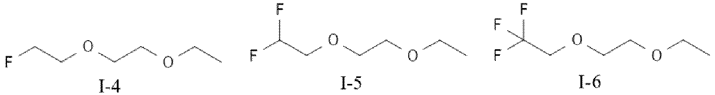 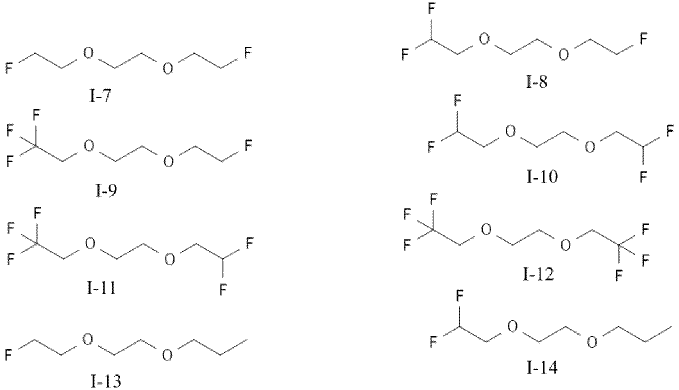 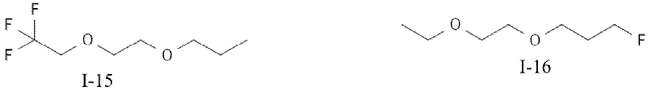 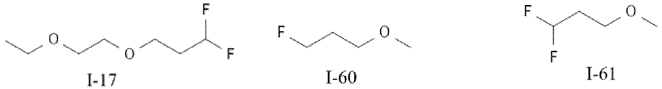 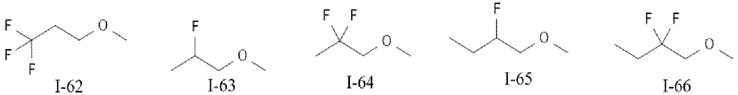 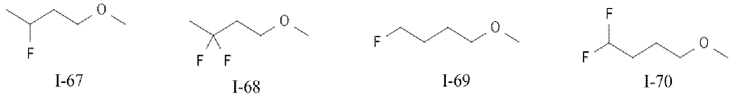 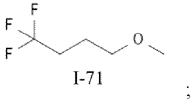 and
optionally, the compound of formula (I) is selected from at least one of I-2, I-11, I-66, and I-68, and more optionally, I-2 and/or I-66.

5. The electrolyte according to any one of claims 1 to 4, wherein a concentration of the prelithiation additive is 0.1 M to 1 M, optionally 0.3 M to 0.7 M, and more optionally 0.4 M to 0.6 M.

6. The electrolyte according to any one of claims 1 to 5, wherein the solvent comprises at least 50% by weight, optionally at least 70% by weight, and more optionally at least 90% by weight of the compound of formula (I) based on a total mass of the solvent.

7. The electrolyte according to any one of claims 1 to 6, further comprising an electrolytic salt, wherein the electrolytic salt is selected from at least one of lithium bis(fluorosulfonyl)imide, lithium hexafluorophosphate, lithium tetrafluoroborate, lithium hexafluoroarsenate, lithium bis(trifluoromethylsulfonyl)imide, lithium trifluoromethanesulfonate, and lithium difluorophosphate; optionally, the electrolytic salt is selected from at least one of lithium bis(fluorosulfonyl)imide, lithium hexafluorophosphate, and lithium bis(trifluoromethylsulfonyl)imide; and more optionally, the electrolytic salt is lithium bis(fluorosulfonyl)imide.

8. The electrolyte according to claim 7, wherein a concentration of the electrolytic salt is 0.5 M to 5 M, optionally 1 M to 3 M, and more optionally 1.5 M to 2.5 M.

9. A secondary battery, comprising the electrolyte according to any one of claims 1 to 8.

10. The secondary battery according to claim 9, further comprising a negative electrode plate, wherein the negative electrode plate comprises a negative electrode current collector and optionally a coating provided on at least one surface of the negative electrode current collector; wherein the coating is selected from coatings of the following metals or metal oxides: tin, zinc, aluminum, magnesium, silver, gold, gallium, indium, platinum, zinc oxide, aluminum oxide, and titanium oxide, and optionally silver, gold, or titanium oxide.

11. The secondary battery according to claim 9 or 10, wherein a thickness of the coating is at most 200 nm, and optionally at most 100 nm.

12. An electric apparatus, comprising the secondary battery according to any one of claims 9 to 11.
